# EUROPEAN PATENT APPLICATION

(11) **EP 4 645 198 A1**
(43) Date of publication of application: **05.11.2025**
(21) Application number: 24199692.5
(22) Date of filing: 11.09.2024
(51) Int. Cl.: G06Q 40/04

(54) **SYSTEM AND METHOD FOR IMPLEMENTING AN ARTIFICIAL INTELLIGENCE POWERED BOT FOR RAPID PRICING OF FINANCIAL DERIVATIVES**

(30) Priority: 03.05.2024 US 202418654652
(71) Applicant: JPMorgan Chase Bank, N.A., New York, NY 10179 (US)
(72) Inventor: DAI, Mike, New York 10179 (US); NYBECK, Joel, New York 10179 (US); MAROLD, Jacob, New York 10179 (US); GARG, Aditya, New York 10179 (US); WANG, Mengdi, New York 10179 (US); FANG, Lei, New York 10179 (US)
(74) Representative: Keil & Schaafhausen Patentanwälte PartGmbB

(57) **Abstract**

Various methods and processes, apparatuses or systems, and media for data processing are disclosed. A processor implements an AI powered bot system; receives, via a user interface within the bot, user input as text data wherein the text data indicates a RFQ for a derivative instrument; transmits the text data to an AIML NLP service; extracts, by a parsing module, parameters associated with the RFQ by utilizing an entity extraction model provided by the AIML NLP service; normalizes the extracted parameters and transmits the normalized parameters to an automated pricing module; receives pricing details data by a response generation component embedded within the parsing module from the automated pricing module; and transmits the pricing details data to the bot for receiving user input via the user interface to conduct a transaction with respect to the derivative instrument.

## Description

### TECHNICAL FIELD

This disclosure generally relates to data processing, and, more particularly, to methods and apparatuses for implementing a platform, language, cloud, and database agnostic system which implements an Artificial intelligence (AI) powered bot for automatic pricing of financial derivatives from natural language.

### BACKGROUND

The developments described in this section are known to the inventors. However, unless otherwise indicated, it should not be assumed that any of the developments described in this section qualify as prior art merely by virtue of their inclusion in this section, or that these developments are known to a person of ordinary skill in the art.

The financial derivatives sales businesses at large broker dealers operates via a dynamic sales-client relationship. Most request intake, negotiation, and response occurs via text-based communication channels (chat, email, etc.), although voice or speech channels are also possible Clients are traditionally institutional investors but may be any client interested in buying or selling of derivatives. Derivatives include a diverse range of product offerings such as swaps, puts, calls, exotics options, or more complex strategies based on combinations of the above. They may be single-leg requests, or multi-leg requests, and may appear in text-based tables or across multiple sales/client messages sent within commercial chat applications. Pricing specific information may be impacted based on package requests (e.g. multiple trade legs wholly considered from a risk-perspective).

Typically, salespersons are responsible for processing Requests for Quote (RFQ) from the client into completed trades. RFQ is a process in which a company solicits select suppliers and contractors to submit price quotes and bids for the chance to fulfill certain tasks or projects. Requests from clientele may be generated programmatically via algorithmic routines and price responses are expected to be rapid, as derivatives products are typically more sensitive to various market movements which occur on relatively short timescales (milliseconds or seconds or minutes). These interactions traditionally occur through one or more unstructured natural language communication pathways (chat, voice/speech, email, etc.). During the receipt and execution of a given RFQ, textual information must be translated and transferred to structured systems. These systems are involved in aligning pricing operations, or initiating workflows which ultimately provide pricing information which is subsequently returned to the requesting party.

As the operations described above occur via manual and unstructured steps, the process may be wrought with inefficiencies. Within each request handling operation, conventional techniques involve humans to interpret and translate information from the RFQ to arrive at an instrument price.

For example, when a client requests a price on "3m eurusd 1.05 put rko 1.025", the salesperson must decide what each part of the RFQ means in practice; "3m" means three month and they must further decide is that is three months from the day of pricing or closest three month conforming date, "eurusd" means USD per 1 EUR, "1.05" means the EUR put or USD call strike, "rko" means the put knocks out, and "1.025" is the barrier at which the put knocks out. Concomitant with translation is the entry of pricing details via natural language into an intermediary which serves as the input to pricing workflows. In natural language based translation, humans translate into a summarized textual representation, whereby dates, etc. may achieve a normalized form across potential legs of the trade, and is communicated via subsequent unstructured channels. In structured translation, the trade parameters are summarized into a representation serving as the data input to a pricing system. In each of these scenarios, this high-touch process may prove to be error prone due to manual data entry across multiple people across sales, trading, and structuring. In addition, miscommunication may further add undesirable processing time (hours) which render the original RFQ undesirable based on reversed/changed markets conditions, , resulting in lost business.

### SUMMARY

The present disclosure relates generally to the field of customer service automation, specifically in the dealing of high dollar amount financial derivatives trades. For example, data entry represents one dimension which may be greatly improved using artificial intelligence techniques. Other steps may include the automation of pricing, the programmatic generation of a natural language response, and any subsequent alteration, modification, or clarification of details of the request. Also, the trade booking procedure may be automated upon receipt and confirmation of the priced product(s) within a natural language context.

To resolve these inefficiencies associated with conventional techniques and improve client experience, the present disclosure, through one or more of its various aspects, embodiments, and/or specific features or sub-components, provides, among other features, various systems, servers, devices, methods, media, programs, and platforms for implementing a platform, language, cloud, and database agnostic rapid pricing module configured to implement an AI powered bot for the rapid pricing of derivatives described herein, which can understand clients' real-time natural language RFQs, automatically price them, and generate a natural language response containing pricing details. The rapid pricing module as disclosed herein may simply be referred to as "system." The system operates rapidly, producing a natural language response quickly, which greatly streamlines the existing aforementioned workflows. The clarity and speed with which responses are generated increases reputational perception, and reduces risk, thereby increasing the likelihood of successful trading business.

As disclosed herein, the entire sequencing of steps are implemented within a conversational bot system to: 1) receive a natural language derivative pricing request, 2) programmatically price the request, 3) use natural language generation to respond to the requesting party with pricing details, and 4) collect feedback and clarifications from the requesting party within the bot interface, but the disclosure is not limited thereto.

According to exemplary embodiments, the bot as implemented by the rapid pricing module may automatically price high dollar-value, complex, and bespoke derivatives trades between broker dealers and institutional clients that has traditionally taken place as direct chat or verbal communication. According to exemplary embodiments, the bot may be configured to process text data, voice or speech data, etc., without departing from the scope of the present disclosure.

The bot, according to exemplary embodiments, may also implement highly specific Natural Language Understanding (NLU) processes for an evolving landscape of colloquial terminology expressed within derivatives RFQ structures (dates, product mentions, strike prices, units, notional values, currencies, etc.) required to adequately process requests. This may include interpretation of the collection of colloquial terminology in-aggregate against a pricing outcome goal which may include multi-leg derivatives and alternative ambiguous representations of financial parameters.

According to exemplary embodiments, the bot may additionally include a natural language generation component to generate natural language responses and summaries of highly complex derivatives trade information.

For example, the bot leverages a Natural Language Processing (NLP) AI system which has re-training capability to enable fine-tuning to a variety of derivatives products. According to exemplary embodiments, the system may: parse RFQ text, extract or identify relevant derivatives attributes or entities such as product type, maturity, time of expiration, observation frequency, etc., standardize those attributes or entities (e.g., "terminal" or "european" or "at expry" = European observation frequency; "12/20/2024" or "Dec 20th 2024" or "Dec 20 24" = year: 2024, month: 12, day: 20; "EDSP" or "SQ" or "SOD" or "open" = final observation on morning special quotation) as well as provide NLU capabilities required to associate trade attributes into specific trade leg information. The trade leg information may be subsequently forwarded to a downstream pricing application and Order Management System (OMS). Upon the completion of pricing, a Natural Language Generation (NLG) machinery may structure a response back to the client.

According to exemplary embodiments, a method for data processing by utilizing one or more processors along with allocated memory is disclosed. The method may include: i) implementing an AI powered bot system, wherein the bot system includes a user interface; ii) establishing a communication link among the bot system, an AI and Machine Learning Natural Language Processing (AIML NLP) service, a parsing module including a post processing component and a response generation component, an automated pricing module, and an order management system; iii) receiving, by the parsing module, via the user interface, user input from a user as text data wherein the text data indicates a RFQ for a derivative instrument; iv) transmitting the text data to the AIML NLP service from the parsing module; v) extracting, by the parsing module, parameters associated with the RFQ by utilizing an entity extraction model provided by the AIML NLP service; vi) normalizing the extracted parameters and transmitting the normalized parameters to the automated pricing module; vii) receiving pricing details data by the response generation component from the automated pricing module; viii) and transmitting the pricing details data to the bot for receiving user input via the user interface to conduct a transaction with respect to the derivative instrument. According to exemplary embodiments, step viii) may further include additional steps of confirming, by the user, the trade to the bot and both submitting it for trading.

According to exemplary embodiments, text data may include user input received as voice or speech from the user.

According to exemplary embodiments, the method may further include: recording the transaction and transmitting the recorded transaction to the order management system for execution; and executing the transaction with respect to the derivative instrument.

According to exemplary embodiments, the post processing component may implement NLU processes for colloquial terminology expressed within derivatives RFQ structures.

According to exemplary embodiments, the method may further include: generating a human readable response by the response generation module from the pricing details data returned by automated pricing module by implementing an NLG algorithm such as invocation of a large language model (llm); and transmitting the human readable response to the user interface.

According to exemplary embodiments, the entity extraction model may be a machine learning model that is trained to extract entities that represent bits of information about nature of the RFQ from the user.

According to exemplary embodiments, the method may further include: storing the pricing details data associated with the RFQ onto a database; receiving user input to reprice the RFQ; and repeating the steps iv) through viii) to generate a repricing of the RFQ. For example, the bot may also be configured to request clarifying statements from the user if the bot is not able to successfully interpret the RFQ. For example, for the RFQ "SPX Call for June in 400x", the bot may inquire, i.e., "what strike did you want?."

According to exemplary embodiments, the method may further include: implementing a feedback loop service that, for each request, receives all information pertaining to the RFQ including one or more of the following: original text, entities predicted by a Named Entity Recognition (NER) model, normalized tradeable format, generated response, and user's feedback on correctness of information presented to the user.

According to exemplary embodiments, there may be two forms of feedback, i.e., 1) feedback provided by the client about the pricing returned by the bot (i.e., it's too expensive, response too slow, or the interpretation (of the entire system) was wrong) or 2) feedback pertaining to the AIML NER task that may be utilized to improve the NER model which is collected through validation of the parsed parameters vs. real parameters, but the disclosure is not limited thereto.

According to exemplary embodiments, a system for data processing is disclosed. The system may include: a processor; and a memory operatively connected to the processor via a communication interface, the memory storing computer readable instructions, when executed, may cause the processor to: i) implement an AI powered bot system, wherein the bot system includes a user interface; ii) establish a communication link among the bot system, an AIML NLP service, a parsing module including a post processing component and a response generation component, an automated pricing module, and an order management system; iii) receive, by the parsing module, via the user interface, user input from a user as text data wherein the text data indicates a RFQ for a derivative instrument; iv) transmit the text data to the AIML NLP service from the parsing module; v) extract, by the parsing module, parameters associated with the RFQ by utilizing an entity extraction model provided by the AIML NLP service; vi) normalize the extracted parameters and transmit the normalized parameters to the automated pricing module; vii) receive pricing details data by the response generation component from the automated pricing module; viii) and transmit the pricing details data to the bot for receiving user input via the user interface to conduct a transaction with respect to the derivative instrument.

According to exemplary embodiments, the processor may be further configured to: record the transaction and transmit the recorded transaction to the order management system for execution; and execute the transaction with respect to the derivative instrument.

According to exemplary embodiments, the processor may be further configured to: generate a human readable response by the response generation module from the pricing details data returned by automated pricing module by implementing an NLG algorithm; and transmit the human readable response to the user interface.

According to exemplary embodiments, the processor may be further configured to: store the pricing details data associated with the RFQ onto a database; receive user input to reprice the RFQ; and repeat the steps iv) through viii) to generate a repricing of the RFQ.

According to exemplary embodiments, the processor may be further configured to: implement a feedback loop service that, for each request, receives all information pertaining to the RFQ including one or more of the following: original text, entities predicted by an NER model, normalized tradeable format, generated response, and user's feedback on correctness of information presented to the user.

According to exemplary embodiments, a non-transitory computer readable medium configured to store instructions for data processing is disclosed. The instructions, when executed, may cause a processor to perform the following: i) implementing an AI powered bot system, wherein the bot system includes a user interface; ii) establishing a communication link among the bot system, an AIML NLP service, a parsing module including a post processing component and a response generation component, an automated pricing module, and an order management system; iii) receiving, by the parsing module, via the user interface, user input from a user as text data wherein the text data indicates a RFQ for a derivative instrument; iv) transmitting the text data to the AIML NLP service from the parsing module; v) extracting, by the parsing module, parameters associated with the RFQ by utilizing an entity extraction model provided by the AIML NLP service; vi) normalizing the extracted parameters and transmitting the normalized parameters to the automated pricing module; vii) receiving pricing details data by the response generation component from the automated pricing module; viii) and transmitting the pricing details data to the bot for receiving user input via the user interface to conduct a transaction with respect to the derivative instrument.

According to exemplary embodiments, the instructions, when executed, may cause the processor to further perform the following: recording the transaction and transmitting the recorded transaction to the order management system for execution; and executing the transaction with respect to the derivative instrument.

According to exemplary embodiments, the instructions, when executed, may cause the processor to further perform the following: generating a human readable response by the response generation module from the pricing details data returned by automated pricing module by implementing an NLG algorithm such as invocation of a large language model (llm); and transmitting the human readable response to the user interface.

According to exemplary embodiments, the instructions, when executed, may cause the processor to further perform the following: storing the pricing details data associated with the RFQ onto a database; receiving user input to reprice the RFQ; and repeating the steps iv) through viii) to generate a repricing of the RFQ.

According to exemplary embodiments, the instructions, when executed, may cause the processor to further perform the following: implementing a feedback loop service that, for each request, receives all information pertaining to the RFQ including one or more of the following: original text, entities predicted by an NER model, normalized tradeable format, generated response, and user's feedback on correctness of information presented to the user.

### BRIEF DESCRIPTION OF THE DRAWINGS

The present disclosure is further described in the detailed description which follows, in reference to the noted plurality of drawings, by way of non-limiting examples of preferred embodiments of the present disclosure, in which like characters represent like elements throughout the several views of the drawings.
FIG. 1 illustrates a computer system for implementing a platform, language, database, and cloud agnostic rapid pricing module configured to implement an AI powered bot for rapid pricing of financial derivatives in accordance with an exemplary embodiment.
FIG. 2 illustrates an exemplary diagram of a network environment with a platform, language, database, and cloud agnostic rapid pricing device in accordance with an exemplary embodiment.
FIG. 3 illustrates a system diagram for implementing a platform, language, database, and cloud agnostic rapid pricing device having a platform, language, database, and cloud agnostic rapid pricing module in accordance with an exemplary embodiment.
FIG. 4 illustrates a system diagram for implementing a platform, language, database, and cloud agnostic rapid pricing module of FIG. 3 in accordance with an exemplary embodiment.
FIG. 5 illustrates an exemplary system architecture implemented by the platform, language, database, and cloud agnostic rapid pricing module of FIG. 4 in accordance with an exemplary embodiment.
FIG. 6 illustrates an exemplary flow chart of a process implemented by the platform, language, database, and cloud agnostic rapid pricing module of FIG. 4 for implementing an AI powered bot for rapid pricing of financial derivatives in accordance with an exemplary embodiment.

### DETAILED DESCRIPTION

Through one or more of its various aspects, embodiments and/or specific features or sub-components of the present disclosure, are intended to bring out one or more of the advantages as specifically described above and noted below.

The examples may also be embodied as one or more non-transitory computer readable media having instructions stored thereon for one or more aspects of the present technology as described and illustrated by way of the examples herein. The instructions in some examples include executable code that, when executed by one or more processors, cause the processors to carry out steps necessary to implement the methods of the examples of this technology that are described and illustrated herein.

As is traditional in the field of the present disclosure, example embodiments are described, and illustrated in the drawings, in terms of functional blocks, units and/or modules. Those skilled in the art will appreciate that these blocks, units and/or modules are physically implemented by electronic (or optical) circuits such as logic circuits, discrete components, microprocessors, hard-wired circuits, memory elements, wiring connections, and the like, which may be formed using semiconductor-based fabrication techniques or other manufacturing technologies. In the case of the blocks, units and/or modules being implemented by microprocessors or similar, they may be programmed using software (e.g., microcode) to perform various functions discussed herein and may optionally be driven by firmware and/or software. Alternatively, each block, unit and/or module may be implemented by dedicated hardware, or as a combination of dedicated hardware to perform some functions and a processor (e.g., one or more programmed microprocessors and associated circuitry) to perform other functions. Also, each block, unit and/or module of the example embodiments may be physically separated into two or more interacting and discrete blocks, units and/or modules without departing from the scope of the inventive concepts. Further, the blocks, units and/or modules of the example embodiments may be physically combined into more complex blocks, units and/or modules without departing from the scope of the present disclosure.

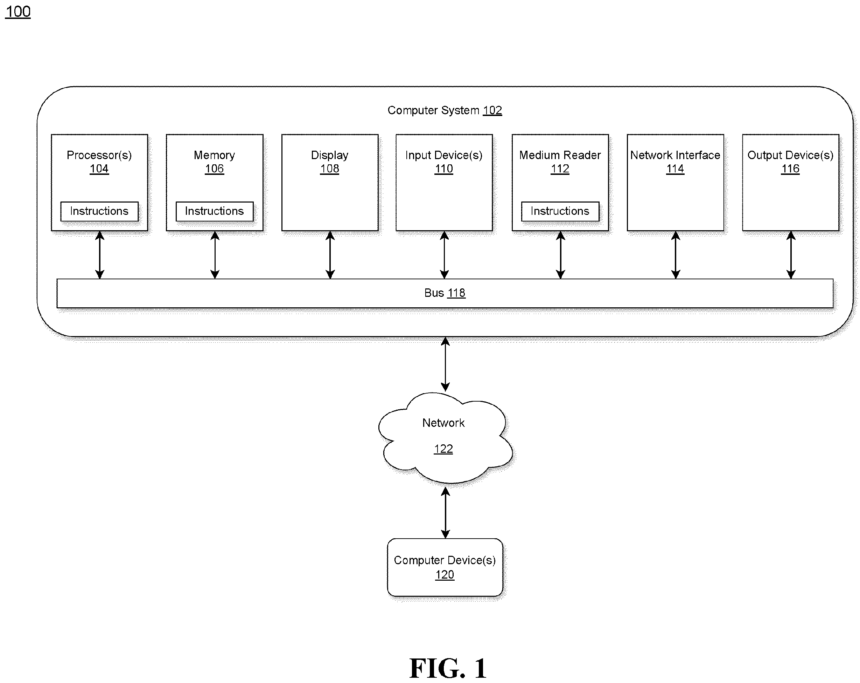

FIG. 1 is an exemplary system 100 for use in implementing a platform, language, database, and cloud agnostic rapid pricing module configured to implement an AI powered bot for rapid pricing of financial derivatives in accordance with an exemplary embodiment. The system 100 is generally shown and may include a computer system 102, which is generally indicated.

The computer system 102 may include a set of instructions that can be executed to cause the computer system 102 to perform any one or more of the methods or computer-based functions disclosed herein, either alone or in combination with the other described devices. The computer system 102 may operate as a standalone device or may be connected to other systems or peripheral devices. For example, the computer system 102 may include, or be included within, any one or more computers, servers, systems, communication networks or cloud environment. Even further, the instructions may be operative in such cloud-based computing environment.

In a networked deployment, the computer system 102 may operate in the capacity of a server or as a client user computer in a server-client user network environment, a client user computer in a cloud computing environment, or as a peer computer system in a peer-to-peer (or distributed) network environment. The computer system 102, or portions thereof, may be implemented as, or incorporated into, various devices, such as a personal computer, a tablet computer, a set-top box, a personal digital assistant, a mobile device, a palmtop computer, a laptop computer, a desktop computer, a communications device, a wireless smart phone, a personal trusted device, a wearable device, a global positioning satellite (GPS) device, a web appliance, or any other machine capable of executing a set of instructions (sequential or otherwise) that specify actions to be taken by that machine. Further, while a single computer system 102 is illustrated, additional embodiments may include any collection of systems or sub-systems that individually or jointly execute instructions or perform functions. The term system shall be taken throughout the present disclosure to include any collection of systems or sub-systems that individually or jointly execute a set, or multiple sets, of instructions to perform one or more computer functions.

As illustrated in FIG. 1, the computer system 102 may include at least one processor 104. The processor 104 is tangible and non-transitory. As used herein, the term "non-transitory" is to be interpreted not as an eternal characteristic of a state, but as a characteristic of a state that will last for a period of time. The term "non-transitory" specifically disavows fleeting characteristics such as characteristics of a particular carrier wave or signal or other forms that exist only transitorily in any place at any time. The processor 104 is an article of manufacture and/or a machine component. The processor 104 is configured to execute software instructions in order to perform functions as described in the various embodiments herein. The processor 104 may be a general-purpose processor or may be part of an application specific integrated circuit (ASIC). The processor 104 may also be a microprocessor, a microcomputer, a processor chip, a controller, a microcontroller, a digital signal processor (DSP), a state machine, or a programmable logic device. The processor 104 may also be a logical circuit, including a programmable gate array (PGA) such as a field programmable gate array (FPGA), or another type of circuit that includes discrete gate and/or transistor logic. The processor 104 may be a central processing unit (CPU), a graphics processing unit (GPU), or both. Additionally, any processor described herein may include multiple processors, parallel processors, or both. Multiple processors may be included in, or coupled to, a single device or multiple devices.

The computer system 102 may also include a computer memory 106. The computer memory 106 may include a static memory, a dynamic memory, or both in communication. Memories described herein are tangible storage mediums that can store data and executable instructions, and are non-transitory during the time instructions are stored therein. Again, as used herein, the term "non-transitory" is to be interpreted not as an eternal characteristic of a state, but as a characteristic of a state that will last for a period of time. The term "non-transitory" specifically disavows fleeting characteristics such as characteristics of a particular carrier wave or signal or other forms that exist only transitorily in any place at any time. The memories are an article of manufacture and/or machine component. Memories described herein are computer-readable mediums from which data and executable instructions can be read by a computer. Memories as described herein may be random access memory (RAM), read only memory (ROM), flash memory, electrically programmable read only memory (EPROM), electrically erasable programmable read-only memory (EEPROM), registers, a hard disk, a cache, a removable disk, tape, compact disk read only memory (CD-ROM), digital versatile disk (DVD), floppy disk, or any other form of storage medium known in the art. Memories may be volatile or non-volatile, secure and/or encrypted, unsecure and/or unencrypted. Of course, the computer memory 106 may comprise any combination of memories or a single storage.

The computer system 102 may further include a display 108, such as a liquid crystal display (LCD), an organic light emitting diode (OLED), a flat panel display, a solid-state display, a cathode ray tube (CRT), a plasma display, or any other known display.

The computer system 102 may also include at least one input device 110, such as a keyboard, a touch-sensitive input screen or pad, a speech input, a mouse, a remote control device having a wireless keypad, a microphone coupled to a speech recognition engine, a camera such as a video camera or still camera, a cursor control device, a GPS device, a visual positioning system (VPS) device, an altimeter, a gyroscope, an accelerometer, a proximity sensor, or any combination thereof. Those skilled in the art appreciate that various embodiments of the computer system 102 may include multiple input devices 110. Moreover, those skilled in the art further appreciate that the above-listed, exemplary input devices 110 are not meant to be exhaustive and that the computer system 102 may include any additional, or alternative, input devices 110.

The computer system 102 may also include a medium reader 112 which is configured to read any one or more sets of instructions, e.g., software, from any of the memories described herein. The instructions, when executed by a processor, can be used to perform one or more of the methods and processes as described herein. In a particular embodiment, the instructions may reside completely, or at least partially, within the memory 106, the medium reader 112, and/or the processor 104 during execution by the computer system 102.

Furthermore, the computer system 102 may include any additional devices, components, parts, peripherals, hardware, software, or any combination thereof which are commonly known and understood as being included with or within a computer system, such as, but not limited to, a network interface 114 and an output device 116. The output device 116 may be, but is not limited to, a speaker, an audio out, a video out, a remote control output, a printer, or any combination thereof.

Each of the components of the computer system 102 may be interconnected and communicate via a bus 118 or other communication link. As shown in FIG. 1, the components may each be interconnected and communicate via an internal bus. However, those skilled in the art appreciate that any of the components may also be connected via an expansion bus. Moreover, the bus 118 may enable communication via any standard or other specification commonly known and understood such as, but not limited to, peripheral component interconnect, peripheral component interconnect express, parallel advanced technology attachment, serial advanced technology attachment, etc.

The computer system 102 may be in communication with one or more additional computer devices 120 via a network 122. The network 122 may be, but is not limited to, a local area network, a wide area network, the Internet, a telephony network, a short-range network, or any other network commonly known and understood in the art. The short-range network may include, for example, infrared, near field communication, ultraband, or any combination thereof. Those skilled in the art appreciate that additional networks 122 which are known and understood may additionally or alternatively be used and that the exemplary networks 122 are not limiting or exhaustive. Also, while the network 122 is shown in FIG. 1 as a wireless network, those skilled in the art appreciate that the network 122 may also be a wired network.

The additional computer device 120 is shown in FIG. 1 as a personal computer. However, those skilled in the art appreciate that, in alternative embodiments of the present application, the computer device 120 may be a laptop computer, a tablet PC, a personal digital assistant, a mobile device, a palmtop computer, a desktop computer, a communications device, a wireless telephone, a personal trusted device, a web appliance, a server, or any other device that is capable of executing a set of instructions, sequential or otherwise, that specify actions to be taken by that device. Of course, those skilled in the art appreciate that the above-listed devices are merely exemplary devices and that the device 120 may be any additional device or apparatus commonly known and understood in the art without departing from the scope of the present application. For example, the computer device 120 may be the same or similar to the computer system 102. Furthermore, those skilled in the art similarly understand that the device may be any combination of devices and apparatuses.

Of course, those skilled in the art appreciate that the above-listed components of the computer system 102 are merely meant to be exemplary and are not intended to be exhaustive and/or inclusive. Furthermore, the examples of the components listed above are also meant to be exemplary and similarly are not meant to be exhaustive and/or inclusive.

According to exemplary embodiments, the rapid pricing module implemented by the system 100 may be platform, language, database, and cloud agnostic that may allow for consistent easy orchestration and passing of data through various components to output a desired result regardless of platform, browser, language, database, and cloud environment. Since the disclosed process, according to exemplary embodiments, is platform, language, database, browser, and cloud agnostic, the rapid pricing module may be independently tuned or modified for optimal performance without affecting the configuration or data files. The configuration or data files, according to exemplary embodiments, may be written using JSON, but the disclosure is not limited thereto. For example, the configuration or data files may easily be extended to other readable file formats such as XML, YAML, etc., or any other configuration based languages.

In accordance with various embodiments of the present disclosure, the methods described herein may be implemented using a hardware computer system that executes software programs. Further, in an exemplary, non-limited embodiment, implementations can include distributed processing, component/object distributed processing, and an operation mode having parallel processing capabilities. Virtual computer system processing can be constructed to implement one or more of the methods or functionality as described herein, and a processor described herein may be used to support a virtual processing environment.

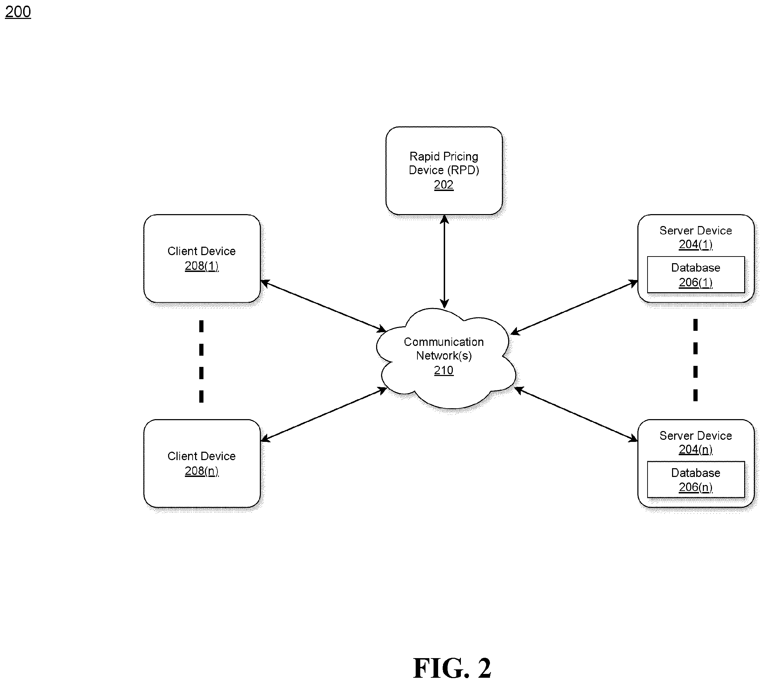

Referring to FIG. 2, a schematic of an exemplary network environment 200 for implementing a language, platform, database, and cloud agnostic rapid pricing device (RPD) of the instant disclosure is illustrated.

According to exemplary embodiments, the above-described problems associated with conventional tools may be overcome by implementing an RPD 202 as illustrated in FIG. 2 that may be configured for implementing a platform, language, database, and cloud agnostic rapid pricing module configured to implement an AI powered bot for rapid pricing of financial derivatives, but the disclosure is not limited thereto.

The RPD 202 may have one or more computer system 102s, as described with respect to FIG. 1, which in aggregate provide the necessary functions.

The RPD 202 may store one or more applications that can include executable instructions that, when executed by the RPD 202, cause the RPD 202 to perform actions, such as to transmit, receive, or otherwise process network messages, for example, and to perform other actions described and illustrated below with reference to the figures. The application(s) may be implemented as modules or components of other applications. Further, the application(s) can be implemented as operating system extensions, modules, plugins, or the like.

Even further, the application(s) may be operative in a cloud-based computing environment. The application(s) may be executed within or as virtual machine(s) or virtual server(s) that may be managed in a cloud-based computing environment. Also, the application(s), and even the RPD 202 itself, may be located in virtual server(s) running in a cloud-based computing environment rather than being tied to one or more specific physical network computing devices. Also, the application(s) may be running in one or more virtual machines (VMs) executing on the RPD 202. Additionally, in one or more embodiments of this technology, virtual machine(s) running on the RPD 202 may be managed or supervised by a hypervisor.

In the network environment 200 of FIG. 2, the RPD 202 is coupled to a plurality of server devices 204(1)-204(n) that hosts a plurality of databases 206(1)-206(n), and also to a plurality of client devices 208(1)-208(n) via communication network(s) 210. A communication interface of the RPD 202, such as the network interface 114 of the computer system 102 of FIG. 1, operatively couples and communicates between the RPD 202, the server devices 204(1)-204(n), and/or the client devices 208(1)-208(n), which are all coupled together by the communication network(s) 210, although other types and/or numbers of communication networks or systems with other types and/or numbers of connections and/or configurations to other devices and/or elements may also be used.

The communication network(s) 210 may be the same or similar to the network 122 as described with respect to FIG. 1, although the RPD 202, the server devices 204(1)-204(n), and/or the client devices 208(1)-208(n) may be coupled together via other topologies. Additionally, the network environment 200 may include other network devices such as one or more routers and/or switches, for example, which are well known in the art and thus will not be described herein.

By way of example only, the communication network(s) 210 may include local area network(s) (LAN(s)) or wide area network(s) (WAN(s)), and can use TCP/IP over Ethernet and industry-standard protocols, although other types and/or numbers of protocols and/or communication networks may be used. The communication network(s) 210 in this example may employ any suitable interface mechanisms and network communication technologies including, for example, teletraffic in any suitable form (e.g., voice, modem, and the like), Public Switched Telephone Network (PSTNs), Ethernet-based Packet Data Networks (PDNs), combinations thereof, and the like.

The RPD 202 may be a standalone device or integrated with one or more other devices or apparatuses, such as one or more of the server devices 204(1)-204(n), for example. In one particular example, the RPD 202 may be hosted by one of the server devices 204(1)-204(n), and other arrangements are also possible. Moreover, one or more of the devices of the RPD 202 may be in the same or a different communication network including one or more public, private, or cloud networks, for example.

The plurality of server devices 204(1)-204(n) may be the same or similar to the computer system 102 or the computer device 120 as described with respect to FIG. 1, including any features or combination of features described with respect thereto. For example, any of the server devices 204(1)-204(n) may include, among other features, one or more processors, a memory, and a communication interface, which are coupled together by a bus or other communication link, although other numbers and/or types of network devices may be used. The server devices 204(1)-204(n) in this example may process requests received from the RPD 202 via the communication network(s) 210 according to the HTTP-based and/or JavaScript Object Notation (JSON) protocol, for example, although other protocols may also be used.

The server devices 204(1)-204(n) may be hardware or software or may represent a system with multiple servers in a pool, which may include internal or external networks. The server devices 204(1)-204(n) hosts the databases 206(1)-206(n) that are configured to store metadata sets, data quality rules, and newly generated data.

Although the server devices 204(1)-204(n) are illustrated as single devices, one or more actions of each of the server devices 204(1)-204(n) may be distributed across one or more distinct network computing devices that together comprise one or more of the server devices 204(1)-204(n). Moreover, the server devices 204(1)-204(n) are not limited to a particular configuration. Thus, the server devices 204(1)-204(n) may contain a plurality of network computing devices that operate using a master/slave approach, whereby one of the network computing devices of the server devices 204(1)-204(n) operates to manage and/or otherwise coordinate operations of the other network computing devices.

The server devices 204(1)-204(n) may operate as a plurality of network computing devices within a cluster architecture, a peer-to peer architecture, virtual machines, or within a cloud architecture, for example. Thus, the technology disclosed herein is not to be construed as being limited to a single environment and other configurations and architectures are also envisaged.

The plurality of client devices 208(1)-208(n) may also be the same or similar to the computer system 102 or the computer device 120 as described with respect to FIG. 1, including any features or combination of features described with respect thereto. Client device in this context refers to any computing device that interfaces to communications network(s) 210 to obtain resources from one or more server devices 204(1)-204(n) or other client devices 208(1)-208(n).

According to exemplary embodiments, the client devices 208(1)-208(n) in this example may include any type of computing device that can facilitate the implementation of the RPD 202 that may efficiently provide a platform for implementing a platform, language, database, and cloud agnostic rapid pricing module configured to implement an AI powered bot for rapid pricing of financial derivatives, but the disclosure is not limited thereto.

The client devices 208(1)-208(n) may run interface applications, such as standard web browsers or standalone client applications, which may provide an interface to communicate with the RPD 202 via the communication network(s) 210 in order to communicate user requests. The client devices 208(1)-208(n) may further include, among other features, a display device, such as a display screen or touchscreen, and/or an input device, such as a keyboard, for example.

Although the exemplary network environment 200 with the RPD 202, the server devices 204(1)-204(n), the client devices 208(1)-208(n), and the communication network(s) 210 are described and illustrated herein, other types and/or numbers of systems, devices, components, and/or elements in other topologies may be used. It is to be understood that the systems of the examples described herein are for exemplary purposes, as many variations of the specific hardware and software used to implement the examples are possible, as may be appreciated by those skilled in the relevant art(s).

One or more of the devices depicted in the network environment 200, such as the RPD 202, the server devices 204(1)-204(n), or the client devices 208(1)-208(n), for example, may be configured to operate as virtual instances on the same physical machine. For example, one or more of the RPD 202, the server devices 204(1)-204(n), or the client devices 208(1)-208(n) may operate on the same physical device rather than as separate devices communicating through communication network(s) 210. Additionally, there may be more or fewer RPDs 202, server devices 204(1)-204(n), or client devices 208(1)-208(n) than illustrated in FIG. 2. According to exemplary embodiments, the RPD 202 may be configured to send code at run-time to remote server devices 204(1)-204(n), but the disclosure is not limited thereto.

In addition, two or more computing systems or devices may be substituted for any one of the systems or devices in any example. Accordingly, principles and advantages of distributed processing, such as redundancy and replication also may be implemented, as desired, to increase the robustness and performance of the devices and systems of the examples. The examples may also be implemented on computer system(s) that extend across any suitable network using any suitable interface mechanisms and traffic technologies, including by way of example only teletraffic in any suitable form (e.g., voice and modem), wireless traffic networks, cellular traffic networks, Packet Data Networks (PDNs), the Internet, intranets, and combinations thereof.

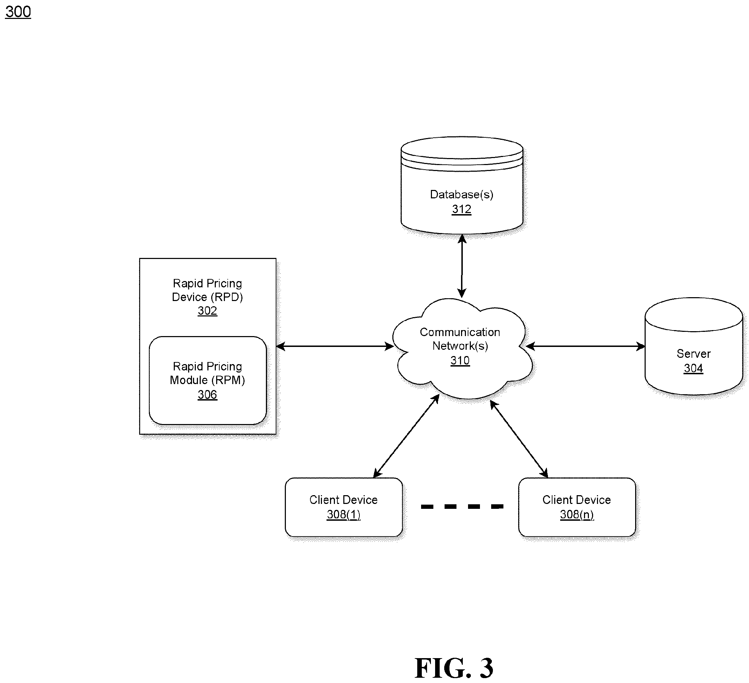

FIG. 3 illustrates a system diagram for implementing a platform, language, and cloud agnostic RPD having a platform, language, database, and cloud agnostic rapid pricing module (RPM) in accordance with an exemplary embodiment.

As illustrated in FIG. 3, the system 300 may include an RPD 302 within which an RPM 306 is embedded, a server 304, a database(s) 312, a plurality of client devices 308(1) ... 308(n), and a communication network 310.

According to exemplary embodiments, the RPD 302 including the RPM 306 may be connected to the server 304, and the database(s) 312 via the communication network 310. The RPD 302 may also be connected to the plurality of client devices 308(1) ... 308(n) via the communication network 310, but the disclosure is not limited thereto. The database(s) 312 may include rule database.

According to exemplary embodiment, the RPD 302 is described and shown in FIG. 3 as including the RPM 306, although it may include other rules, policies, modules, databases, or applications, for example. According to exemplary embodiments, the database(s) 312 may be configured to store ready to use modules written for each API for all environments. Although only one database is illustrated in FIG. 3, the disclosure is not limited thereto. Any number of desired databases may be utilized for use in the disclosed invention herein. The database(s) 312 may be a mainframe database, a log database that may produce programming for searching, monitoring, and analyzing machine-generated data via a web interface, etc., but the disclosure is not limited thereto. In addition, the database(s) 312 may store the large code bases models as directed graphs and graph metrics and graph centrality measures.

According to exemplary embodiments, the RPM 306 may be configured to receive real-time feed of data from the plurality of client devices 308(1) ... 308(n) and secondary sources via the communication network 310.

As may be described below, the RPM 306 may be configured to: i) implement an AI powered bot system, wherein the bot system includes a user interface; ii) establish a communication link among the bot system, an AIML NLP service, a parsing module including a post processing component and a response generation component, an automated pricing module, and an order management system; iii) receive, by the parsing module, via the user interface, user input from a user as text data wherein the text data indicates a RFQ for a derivative instrument; iv) transmit the text data to the AIML NLP service from the parsing module; v) extract, by the parsing module, parameters associated with the RFQ by utilizing an entity extraction model provided by the AIML NLP service; vi) normalize the extracted parameters and transmit the normalized parameters to the automated pricing module; vii) receive pricing details data by the response generation component from the automated pricing module; viii) transmit the pricing details data to the bot for receiving user input via the user interface to conduct a transaction with respect to the derivative instrument, but the disclosure is not limited thereto.

The plurality of client devices 308(1) ... 308(n) are illustrated as being in communication with the RPD 302. In this regard, the plurality of client devices 308(1) ... 308(n) may be "clients" (e.g., customers) of the RPD 302 and are described herein as such. Nevertheless, it is to be known and understood that the plurality of client devices 308(1) ... 308(n) need not necessarily be "clients" of the RPD 302, or any entity described in association therewith herein. Any additional or alternative relationship may exist between either or both of the plurality of client devices 308(1) ... 308(n) and the RPD 302, or no relationship may exist.

The first client device 308(1) may be, for example, a smart phone. Of course, the first client device 308(1) may be any additional device described herein. The second client device 308(n) may be, for example, a personal computer (PC). Of course, the second client device 308(n) may also be any additional device described herein. According to exemplary embodiments, the server 304 may be the same or equivalent to the server device 204 as illustrated in FIG. 2.

The process may be executed via the communication network 310, which may comprise plural networks as described above. For example, in an exemplary embodiment, one or more of the plurality of client devices 308(1) ... 308(n) may communicate with the RPD 302 via broadband or cellular communication. Of course, these embodiments are merely exemplary and are not limiting or exhaustive.

The computing device 301 may be the same or similar to any one of the client devices 208(1)-208(n) as described with respect to FIG. 2, including any features or combination of features described with respect thereto. The RPD 302 may be the same or similar to the RPD 202 as described with respect to FIG. 2, including any features or combination of features described with respect thereto.

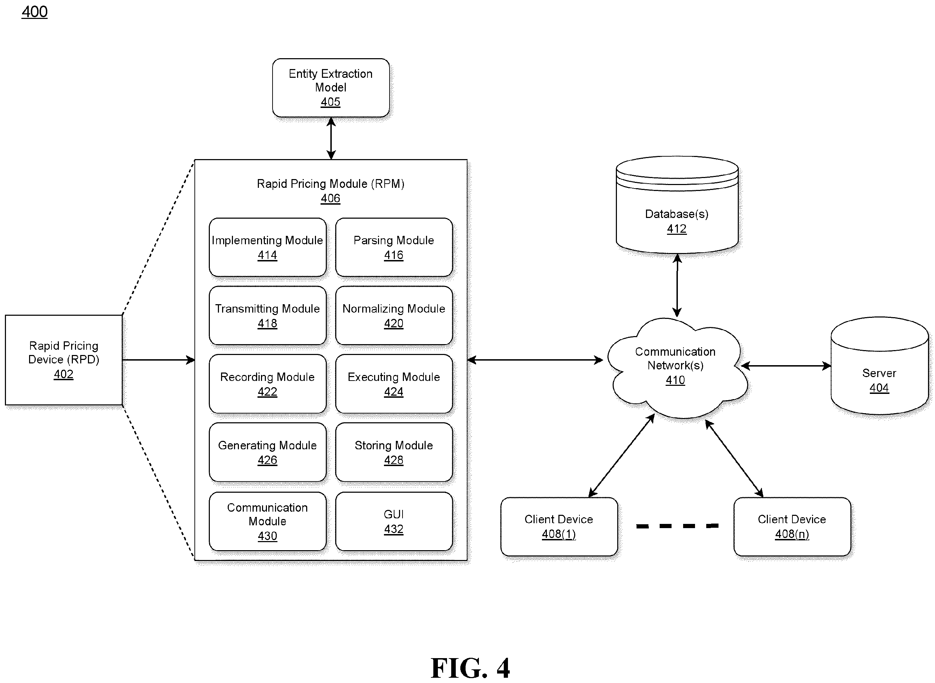

FIG. 4 illustrates a system diagram for implementing a platform, language, database, and cloud agnostic RPM of FIG.3 in accordance with an exemplary embodiment.

According to exemplary embodiments, the system 400 may include a platform, language, database, and cloud agnostic RPD 402 within which a platform, language, database, and cloud agnostic RPM 406 is embedded, a server 404, database(s) 412, and a communication network 410. According to exemplary embodiments, server 404 may comprise a plurality of servers located centrally or located in different locations, but the disclosure is not limited thereto.

According to exemplary embodiments, the RPD 402 including the RPM 406 may be connected to the server 404, an entity extraction model 405, and the database(s) 412 via the communication network 410. The RPD 402 may also be connected to the plurality of client devices 408(1)-408(n) via the communication network 410, but the disclosure is not limited thereto. The RPM 406, the server 404, the plurality of client devices 408(1)-408(n), the database(s) 412, the communication network 410 as illustrated in FIG. 4 may be the same or similar to the RPM 306, the server 304, the plurality of client devices 308(1)-308(n), the database(s) 312, the communication network 310, respectively, as illustrated in FIG. 3.

According to exemplary embodiments, the RPM 406 may be configured to implement an AI powered bot for rapid pricing of financial derivatives, but the disclosure is not limited thereto.

For example, the RPM 406 may be related to generally to the field of customer service automation, specifically in the dealing of high dollar amount financial derivatives trades. For example, data entry represents one dimension which may be greatly improved using artificial intelligence techniques. Subsequent steps also include aspects which may be improved, such as the automation of pricing, the generation of a natural language response, and any subsequent clarification or modification of details of the request. Also, the trade booking procedure may be automated upon receipt and confirmation of the priced product(s) within a natural language context.

To resolve these inefficiencies associated with conventional techniques and improve client experience, the present disclosure, through one or more of its various aspects, embodiments, and/or specific features or sub-components, provides, among other features, various systems, servers, devices, methods, media, programs, and platforms for implementing the RPM 406 configured to implement an AI powered bot for the rapid pricing of derivatives described herein, which can understand clients' real-time natural language RFQs, automatically price them, and generate a natural language response containing pricing details. The system implemented by the RPM 406 configured to operate rapidly, producing a natural language response in seconds, which greatly streamlines the existing aforementioned workflows. The clarity and speed with which responses are generated increases reputational perception, and reduces risk, thereby increasing the likelihood of successful trade business.

As disclosed herein, the entire sequencing of steps are implemented by the RPM 406 within a conversational bot system to: 1) receive a natural language derivative pricing request, 2) programmatically price the request, 3) use natural language generation to respond to the requesting party with pricing details, and 4) collect feedback and clarifications from the requesting party within the bot interface, but the disclosure is not limited thereto.

According to exemplary embodiments, the bot as implemented by the RPM 406 may automatically price high dollar-value, complex, and bespoke derivatives trades between broker dealers and institutional clients that has traditionally taken place as direct chat or verbal communication.

The bot, according to exemplary embodiments, may also implement highly specific NLU processes for colloquial terminology expressed within derivatives RFQ structures (dates, product mentions, strike prices, units, notional values, currencies, etc.) required to adequately process requests. This may include interpretation of the collection of colloquial terminology in-aggregate against a pricing outcome goal which may include multi-leg derivatives and alternative ambiguous representations of financial parameters.

According to exemplary embodiments, the bot may additionally include a natural language generation component to generate natural language responses and summaries of highly complex derivatives trade information.

For example, the bot, implemented by the RPM 406, leverages an NLP AI system which has re-training capability to enable fine-tuning to a variety of derivatives products. According to exemplary embodiments, the system may: parse RFQ text, extract or identify relevant derivatives attributes or entities such as product type, maturity, time of expiration, observation frequency, etc., standardize those attributes or entities (e.g., "terminal" or "european" or "at expry" = European observation frequency; "12/20/2024" or "Dec 20th 2024" or "Dec 20 24" = year: 2024, month: 12, day: 20; "EDSP" or "SQ" or "SOD" or "open" = final observation on morning special quotation) as well as provide NLU capabilities required to associate trade attributes into specific trade leg information. The trade leg information may be subsequently forwarded to a downstream pricing application and OMS. Upon the completion of pricing, an NLG machinery may structure a response back to the client.

Details of the RPM 406 and the bot is provided below with corresponding modules that may be configured to, in combination, results in automatic pricing of financial derivatives from natural language, as illustrated in FIGS. 4-6.

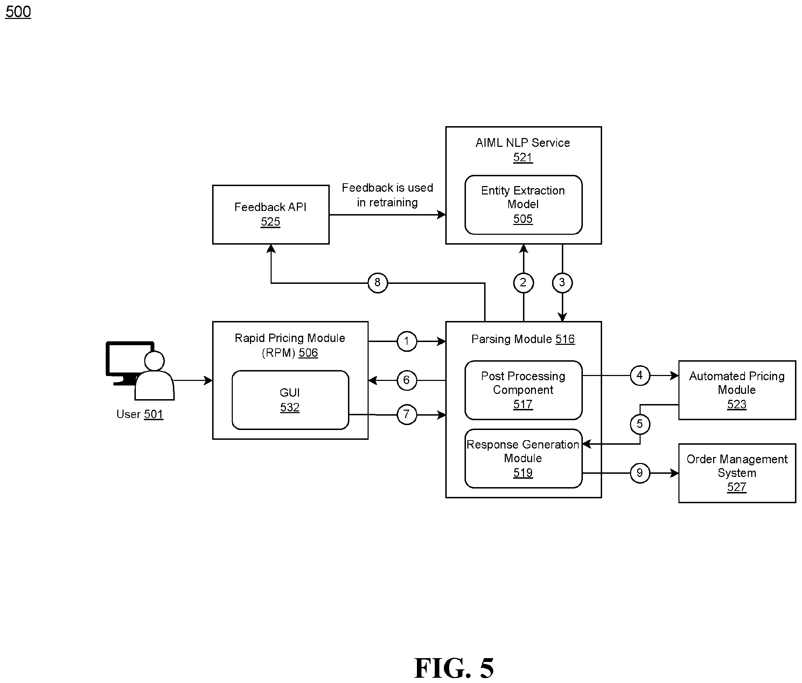

According to exemplary embodiments, as illustrated in FIG. 4, the RPM 406 may include an implementing module 414, a parsing module 416, a transmitting module 418, a normalizing module 420, a recording module 422, an executing module 424, a generating module 426, a storing module 428, a communication module 430, and a GUI 432. According to exemplary embodiments, interactions and data exchange among these modules included in the RPM 406 provide the advantageous effects of the disclosed invention. Functionalities of each module of FIG. 4 may be described in detail below with reference to FIGS. 5-6.

According to exemplary embodiments, each of the implementing module 414, parsing module 416, transmitting module 418, normalizing module 420, recording module 422, executing module 424, generating module 426, storing module 428, and the communication module 430 of the RPM 406 of FIG. 4 may be physically implemented by electronic (or optical) circuits such as logic circuits, discrete components, microprocessors, hard-wired circuits, memory elements, wiring connections, and the like, which may be formed using semiconductor-based fabrication techniques or other manufacturing technologies.

According to exemplary embodiments, each of the implementing module 414, parsing module 416, transmitting module 418, normalizing module 420, recording module 422, executing module 424, generating module 426, storing module 428, and the communication module 430 of the RPM 406 of FIG. 4 may be implemented by microprocessors or similar, and may be programmed using software (e.g., microcode) to perform various functions discussed herein and may optionally be driven by firmware and/or software.

Alternatively, according to exemplary embodiments, each of the implementing module 414, parsing module 416, transmitting module 418, normalizing module 420, recording module 422, executing module 424, generating module 426, storing module 428, and the communication module 430 of the RPM 406 of FIG. 4 may be implemented by dedicated hardware, or as a combination of dedicated hardware to perform some functions and a processor (e.g., one or more programmed microprocessors and associated circuitry) to perform other functions, but the disclosure is not limited thereto. For example, the RPM 406 of FIG. 4 may also be implemented by Cloud based deployment.

According to exemplary embodiments, each of the implementing module 414, parsing module 416, transmitting module 418, normalizing module 420, recording module 422, executing module 424, generating module 426, storing module 428, and the communication module 430 of the RPM 406 of FIG. 4 may be called via corresponding API, but the disclosure is not limited thereto.

According to exemplary embodiments, the process implemented by the RPM 406 may be executed via the communication module 430 and the communication network 410, which may comprise plural networks as described above. For example, in an exemplary embodiment, the various components of the RPM 406 may communicate with the server 404, and the database(s) 412 via the communication module 430 and the communication network 410 and the results (i.e., derivative pricing) may be displayed onto the GUI 432. Of course, these embodiments are merely exemplary and are not limiting or exhaustive. The database(s) 412 may include the databases included within the private cloud and/or public cloud and the server 404 may include one or more servers within the private cloud and the public cloud.

FIG. 5 illustrates an exemplary system architecture 500 implemented by the RPM 406 of FIG. 4 in accordance with an exemplary embodiment. As illustrated in FIG. 5, a user 501 may communicate with an RPM 506 including a GUI 532 by utilizing a client device 408 (see, e.g., FIG. 4) via the communication network 410 (see, e.g., FIG. 4). The RPM 506 along with the GUI 532 may be referred to hereinafter as an AI powered bot system. The RPM 506 may be operatively connected to a parsing module 516 (similar to the parsing module 416 as illustrated in FIG. 4). The parsing module 516 may include two components - a post processing component 517, and a response generation module 519, but the disclosure is not limited thereto. The parsing module 516 may be operatively connected to an AIML NLP service 521 that includes the entity extraction model 405, 505. The parsing module 516 may also be operatively connected to an automated pricing module 523 and an Order Management System (OMS) 527.

Referring back to FIGS. 4 and 5, according to exemplary embodiments, i) the implementing module 414 may be configured to implement the AI powered bot system (i.e., RPM 406, 506), wherein the bot system includes the user interface (i.e., GUI 432); ii) the communication module 430 may be configured to establish a communication link among the bot system (i.e., RPM 406, 506), an AIML NLP service 521, a parsing module 516 including a post processing component 517 and a response generation module 519, an automated pricing module 523, and an OMS 527; iii) receive, by the parsing module 516, via the GUI 532, user input from a user 501 as text data wherein the text data indicates a RFQ for a derivative instrument (step 1 in FIG. 5); iv) the transmitting module 418 may be configured to transmit the text data to the AIML NLP service 521 from the parsing module 516 (step 2 in FIG. 5); v) extract, by the parsing module 516, parameters associated with the RFQ by utilizing the entity extraction model 505 provided by the AIML NLP service 521 (step 3 in FIG. 5); vi) the normalizing module 420 may be configured to normalize the extracted parameters and transmit the normalized parameters to the automated pricing module 523 (step 4 in FIG. 5); the receiving module vii) receive pricing details data by the response generation module 519 from the automated pricing module 523 (step 5 in FIG. 5); and viii) transmit the pricing details data to the bot system for receiving user input via the GUI 532 to conduct a transaction with respect to the derivative instrument (step 6 in FIG. 5). The user 501 may provide feedback on the received pricing and send to the parsing module 516 (step 7 in FIG. 5). The parsing module 516 may utilize feedback API 525, wherein the feedback is used in retraining the entity extraction model (step 8 in FIG. 5).

According to exemplary embodiments, the recording module may be further configured to record the transaction and transmit the recorded transaction to the OMS 527 for execution (step 9 in FIG. 5); and the executing module 424 may be configured to execute the transaction with respect to the derivative instrument.

According to exemplary embodiments, the generating module 426 may be further configured to generate a human readable response by the response generation module 519 from the pricing details data returned by the automated pricing module 523 by implementing an NLG algorithm; and transmit the human readable response to the GUI 532.

According to exemplary embodiments, the storing module 428 may be configured to store the pricing details data associated with the RFQ onto a database. The parsing module 516 may receive user input to reprice the RFQ; and repeat the steps iv) through viii) to generate a repricing of the RFQ.

According to exemplary embodiments, the implementing module 414 may be further configured to implement a feedback loop service that, for each request, receives all information pertaining to the RFQ including one or more of the following: original text, entities predicted by an NER model, normalized tradeable format, generated response, and user's feedback on correctness of information presented to the user.

According to exemplary embodiments, a Bot Interface (i.e., GUI 432, 532) may be provided whereby the user 501 may "chat" with the bot (i.e., RPM 406, 506). It is through this Bot Interface that the user 501 inputs in natural language the financial derivatives contract they wish to price or other instructions, and the bot can respond back to the user 501 with an appropriate action. The user 501 can also provide feedback on the accuracy of the bot's response through feedback buttons (not shown).

According to exemplary embodiments, A Bot Service that serves to keep track of user messages and conversation states, and to determine the intent of each utterance into the Bot Interface and call the parsing module 516 accordingly. The parsing module 516 implements parsing service handles the users' interactions with the bot and routing between the various components of the system architecture 500.

According to exemplary embodiments, the parsing service may be responsible for the following, but the disclosure is not limited thereto: routing the user input to the AIML NLP Service 521 to extract the relevant entities such as the asset, product, strike price, expiry information, etc., from the chat message; entity normalization (NLU) of the extracted entities into a standardized tradable format understood by the automated pricing module 523; sending the normalized tradable format of the users input to the automated pricing module 523 for pricing; generating a human readable response (NLG) from the pricing data returned by automated pricing module 523 and sending it back to Bot Interface as the bot's response; sending the user feedback to on the bot response generated by the system architecture 500 to the Feedback Service (i.e., Feedback API 525); routing the user's requests to trade at a given price to the OMS 527 and/or handling of the request in chat.

According to exemplary embodiments, the AIML NLP Service 521 hosts an Entity Extraction Model 505 which is a machine learning model that is trained to extract entities that represent bits of information about the nature of the request from the client. An example of the input text, and extracted parameters / details can be found below:

```
 Input Text: SX7E/ Eput/Strike:80/Ref.:96.4/Maturity: 16-Dec-2022/6000 Listed;
 Extracted Parameters: "SX7E" ASSET / "E" OPTION _STYLE "PUT" PUT / "80"
 STRIKE_PRICE /"96.4" SPOT_REF / "16-DEC-2022" EXPIRY / "6000" UNITS / "LISTED"
 EXCHANGE.
```

According to exemplary embodiments, the automated pricing module 523 receives the normalized tradeable representation of the entities such as asset, product, strike price, expiry and uses quantitative pricing models and live market data and conditions to derive a price for the given combination of attributes representing the derivatives contract.

The OMS 527, according to exemplary embodiments, serves as a system of record, as well as a platform to facilitate validation and execution of the trade once it is confirmed by the user 501. The OMS 527 also implements the necessary risk controls to mitigate trade of erroneously generated prices and verifies that the price is still tradeable at the time of the user request for execution.

A feedback service which, for each request, received all the information pertaining to the request so the system can improve over time, such as the original text, the entities predicted by NER model, the normalized tradeable format, the generated response, and the user's feedback on the correctness of the information presented to them.

The table (TABLE 1) below demonstrates the input and output of the bot. As illustrated in TABLE 1, in the bot output, the system displays the RFQ as the NLP and NLU components of the bot have understood it, as well as the corresponding pricing details in parenthesis.

This process may completely supersede the traditional sales RFQ pricing workflow with the caveat that, where the various components of the bot have been correctly implemented, including the pricing application, OMS, NLP, NLU, NLG systems, and the pricing provided may, in some instances, need to be confirmed by sales person and executed by trader for risk management purposes.

**TABLE 1:**

| Input RFQ text | Bot Output |
|---|---|
| AS51 09/21/23 C7000 | 21Sep23 AS51 7000 Call, 386.43 offer (~5.22%, 83d, vol = 12.9v, spot ref = 7402.01) |
| 6m NDX 95% 80% appearing put spread with knock in at 75% | 25Jan24 NDX 95%/80% put spread where the 80% put knocks in at 75% (european obs), 2.32% offer (-21d, vanilla put spread = 2.19%, spot ref = 15539.58) |
| SPX 6m 90% 75% resettable put spread, weekly observations, 3% increments, max 4 resets | 25Jan24 SPX 90%/75% Resettable Put Spread (90% put strike resets +3% for every +3% in spot, weekly observation, max 4 resets, 75% vanilla put), 1.07% offer (-5d, vanilla put spread = 0.89%, spot ref = 4572.40) |
| 6m ndx 90% put ko at 75% | 26Jan24 NDX 90% Put that knocks out if NDX touches 75% before 26Jan24 (continuous), 0.35% offer (-3d, spot ref = 15512.49) |
| | 19Jan24 SPX 4800 OneTouch, 69.97% offer (continuous obs, 698d, spot ref = 4560.17) |
| SPX Jan 4800 One Touch | 16Feb24 SPX 4800 OneTouch, 74.67% offer (continuous obs, 602d, spot ref = 4560.42) |
| SPX Feb 4800 One Touch | |
| SPX Mar 4800 One Touch | 15Mar24 SPX 4800 OneTouch, 77.89% offer (continuous obs, 529d, spot ref = 4560.17) |
| SPX Apr 4800 One Touch | |
| | 19Apr24 SPX 4800 OneTouch, 80.82% offer (continuous obs, 459d, spot ref = 4560.42) |
| 3m eurusd 1.05 put rko 1.025 | 3Jun24 EURUSD 1.0500 put that knocks out if EURUSD touches 1.0250 before 3Jun24 (continuous), 0.0575% offer (-2d, vanilla fly = 0.202%, spot ref = 1.0840) |
| USD 1y5y atmf payer for $250mm pls | USD SOFR 1y5y ATMF payer, 202.5c spot premium offer (1yfwd5y ref = 3.624%) |
| 6m2y 3.75% payer cont on SPX > 100% at mat | USD SOFR 6m2y 3.75% payer contingent on SPX > 100% at maturity (single observation), 70c offer (~31% discount to the vanilla payer at 102c, corr bid = -5%, 6mfwd2y ref = 4.034%) |

Exemplary functionality and workflows implemented by the RPM 406, 506 may include the following, but the disclosure is not limited thereto.

Price an RFQ: a. The client messages the Pricing Bot Interface with an RFQ; b. The Bot Service detects the "Pricing Request" and forwards it to the Parsing Service (i.e., parsing module 516 as illustrated in FIG. 5); c. The parsing service calls the AIML NLP Service to extract the RFQ parameters; d. The RFQ parameters are normalized and sent to the Automated Pricing Service (i.e., automated pricing module 523 as illustrated in FIG. 5); e. The pricing details are used to generate and send a response back to the client with a price for the RFQ they had requested.

Reprice an RFQ: After completing the workflow to Price an RFQ 1.a - 1.e, the client may convey to the bot that they wish to "Reprice" the previously quoted RFQ. The Bot Service will have stored in memory the details of the prior RFQ from the client, and once again forward the RFQ to the Parsing Service, repeating 1.b - 1.e.

Restructure an RFQ: After completing the workflow to Price an RFQ 1.a - 1.e, the client may convey to the Bot Service that they wish to "Restructure" the previously quoted RFQ which may involve adding a new leg to the trade, or replacement of parts of the RFQ such as the asset or expiry. The Bot Service will have stored in memory the details of the prior RFQ from the client, and be able to instruct the Parsing Service that the client's intent is to restructure the RFQ, along with the accompanying message. The Parsing Service sends the new message to the AIML NLP Service to extract the new parameters of the text. The tradeable format from the previous RFQ is restructured to capture these new parameters, repeating 1.d - 1.e.

Submit RFQ for trade execution: If the client "Confirms" to the bot they wish to proceed after receiving the pricing details from the Bot, the Bot Service sends the details of the RFQ and the pricing details to the Order Management System for trading.

Submit a client trade idea for consideration: The client messages the Bot that they wish to propose a trade idea. The Bot Service flags the utterance as a "Trade Proposal" instead of an RFQ. The Bot Service forwards the message to the Parsing Service. The Parsing Service calls the AIML NLP Service to extract the trade parameters. The trade parameters are normalized, and the trade idea is logged and distributed to the relevant parties within a firm. The Bot Interface indicates to the client that their trade idea has been acknowledged, as well as a summary of the trade idea as it was understood.

Submit Feedback: Each response from the Bot Interface has buttons to record feedback on whether the response was as expected or not which can be used to improve subsequent iterations of the various components described herein.

Those skilled in the art appreciate that the above-listed components and functionality of the AI powered bot for the rapid pricing of financial derivatives are merely meant to be exemplary and are not intended to be exhaustive and/or inclusive of all possible or future functionality the Bot. Furthermore, the examples of input/output above are also meant to be exemplary and similarly are not meant to be exhaustive and/or inclusive.

Although only one central parsing service and associated componentry is illustrated in the figures, the disclosure is not limited thereto. Any number of desired parsing services may be utilized for use in this invention herein. In addition, while the trained ML model contains specific tuning on the historical data, any trained ML model which performs similar operations may be utilized without departing from the inventive concept. The storage locations specified in the feedback loop and elsewhere may also be any suitable to produce programming for searching, monitoring, and analyzing machine-generated data via a web interface, etc., but the disclosure is not limited thereto.

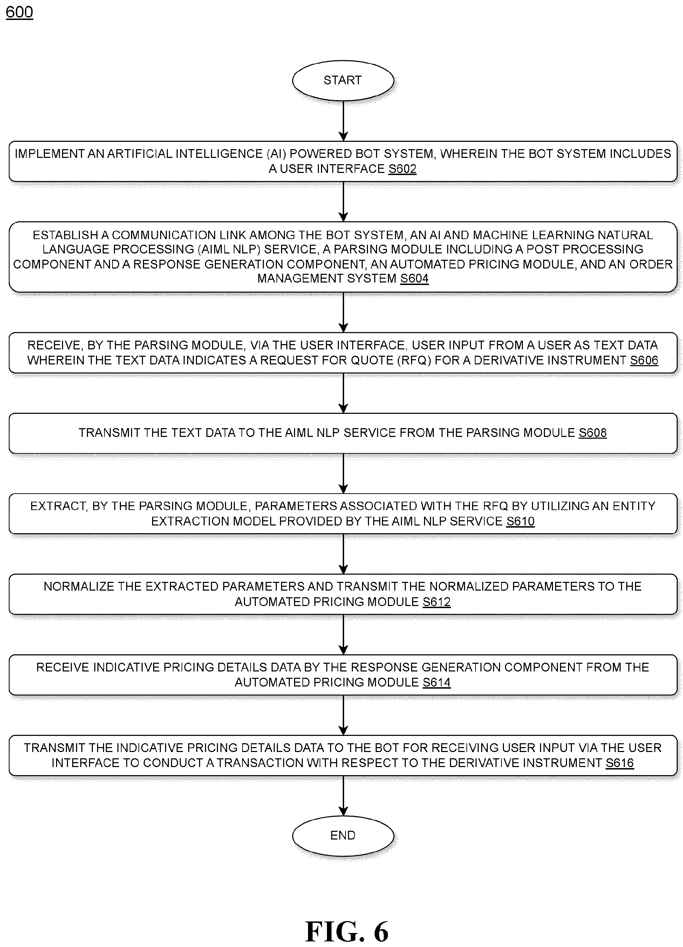

FIG. 6 illustrates an exemplary flow chart of a process 600 implemented by the platform, language, database, and cloud agnostic RPM 406, 506 for data processing in accordance with an exemplary embodiment. It may be appreciated that the illustrated process 600 and associated steps may be performed in a different order, with illustrated steps omitted, with additional steps added, or with a combination of reordered, combined, omitted, or additional steps.

As illustrated in FIG. 6, at step S602, the process 600 may include implementing an AI powered bot system, wherein the bot system includes a user interface.

At step S604, the process 600 may include establishing a communication link among the bot system, an AIML NLP service, a parsing module including a post processing component and a response generation component, an automated pricing module, and an order management system.

At step S606, the process 600 may include receiving, by the parsing module, via the user interface, user input from a user as text data wherein the text data indicates a RFQ for a derivative instrument.

At step S608, the process 600 may include transmitting the text data to the AIML NLP service from the parsing module.

At step S610, the process 600 may include extracting, by the parsing module, parameters associated with the RFQ by utilizing an entity extraction model provided by the AIML NLP service.

At step S612, the process 600 may include normalizing the extracted parameters and transmitting the normalized parameters to the automated pricing module.

At step S614, the process 600 may include receiving pricing details data by the response generation component from the automated pricing module.

At step S616, the process 600 may include transmitting the pricing details data to the bot for receiving user input via the user interface to conduct a transaction with respect to the derivative instrument.

According to exemplary embodiments, the process 600 may further include: recording the transaction and transmitting the recorded transaction to the order management system for execution; and executing the transaction with respect to the derivative instrument.

According to exemplary embodiments, in the process 600, the post processing component may implement NLU processes for colloquial terminology expressed within derivatives RFQ structures.

According to exemplary embodiments, the process 600 may further include: generating a human readable response by the response generation module from the pricing details data returned by automated pricing module by implementing an NLG algorithm; and transmitting the human readable response to the user interface.

According to exemplary embodiments, in the process 600, the entity extraction model may be a machine learning model that is trained to extract entities that represent bits of information about nature of the RFQ from the user.

According to exemplary embodiments, the process 600 may further include: storing the pricing details data associated with the RFQ onto a database; receiving user input to reprice the RFQ; and repeating the steps S608-S616 to generate a repricing of the RFQ.

According to exemplary embodiments, the process 600 may further include: implementing a feedback loop service that, for each request, receives all information pertaining to the RFQ including one or more of the following: original text, entities predicted by a Named Entity Recognition (NER) model, normalized tradeable format, generated response, and user's feedback on correctness of information presented to the user.

According to exemplary embodiments, the RPD 402 may include a memory (e.g., a memory 106 as illustrated in FIG. 1) which may be a non-transitory computer readable medium that may be configured to store instructions for implementing a platform, language, database, and cloud agnostic RPM 406 for data processing as disclosed herein. The RPD 402 may also include a medium reader (e.g., a medium reader 112 as illustrated in FIG. 1) which may be configured to read any one or more sets of instructions, e.g., software, from any of the memories described herein. The instructions, when executed by a processor embedded within the RPM 406 or within the RPD 402, may be used to perform one or more of the methods and processes as described herein. In a particular embodiment, the instructions may reside completely, or at least partially, within the memory 106, the medium reader 112, and/or the processor 104 (see FIG. 1) during execution by the RPD 402.

According to exemplary embodiments, the instructions, when executed, may cause a processor embedded within the RPM 406 or the RPD 402 to perform the following: i) implementing an AI powered bot system, wherein the bot system includes a user interface; ii) establishing a communication link among the bot system, an AIML NLP service, a parsing module including a post processing component and a response generation component, an automated pricing module, and an order management system; iii) receiving, by the parsing module, via the user interface, user input from a user as text data wherein the text data indicates a RFQ for a derivative instrument; iv) transmitting the text data to the AIML NLP service from the parsing module; v) extracting, by the parsing module, parameters associated with the RFQ by utilizing an entity extraction model provided by the AIML NLP service; vi) normalizing the extracted parameters and transmitting the normalized parameters to the automated pricing module; vii) receiving pricing details data by the response generation component from the automated pricing module; viii) transmitting the pricing details data to the bot for receiving user input via the user interface to conduct a transaction with respect to the derivative instrument. According to exemplary embodiments, the processor may be the same or similar to the processor 104 as illustrated in FIG. 1 or the processor embedded within the RPD 202, RPD 302, RPD 402, and RPM 406, 506 which is the same or similar to the processor 104.

According to exemplary embodiments, the instructions, when executed, may cause the processor 104 to further perform the following: recording the transaction and transmitting the recorded transaction to the order management system for execution; and executing the transaction with respect to the derivative instrument.

According to exemplary embodiments, the instructions, when executed, may cause the processor 104 to further perform the following: generating a human readable response by the response generation module from the pricing details data returned by automated pricing module by implementing an NLG algorithm; and transmitting the human readable response to the user interface.

According to exemplary embodiments, the instructions, when executed, may cause the processor 104 to further perform the following: storing the pricing details data associated with the RFQ onto a database; receiving user input to reprice the RFQ; and repeating the steps iv) through viii) to generate a repricing of the RFQ.

According to exemplary embodiments, the instructions, when executed, may cause the processor 104 to further perform the following: implementing a feedback loop service that, for each request, receives all information pertaining to the RFQ including one or more of the following: original text, entities predicted by an NER model, normalized tradeable format, generated response, and user's feedback on correctness of information presented to the user.

According to exemplary embodiments as disclosed above in FIGS. 1-6, technical improvements effected by the instant disclosure may include a platform for implementing a platform, language, cloud, and database agnostic rapid pricing module configured to implement an AI powered bot for the rapid pricing of derivatives described herein, which can understand clients' real-time natural language RFQs, automatically price them, and generate a natural language response containing pricing details. The system operates rapidly, producing a natural language response in seconds, which greatly streamlines the existing aforementioned workflows. The clarity and speed with which responses are generated increases reputational perception, and reduces risk, thereby increasing the likelihood of successful trade business, but the disclosure is not limited thereto.

According to exemplary embodiments as disclosed above in FIGS. 1-6, technical improvements effected by the instant disclosure may include implementing the entire sequencing of steps within a conversational bot system to: 1) receive a natural language derivative pricing request, 2) programmatically price the request, 3) use natural language generation to respond to the requesting party with pricing details, and 4) collect feedback and clarifications from the requesting party within the bot interface, but the disclosure is not limited thereto.

Although the invention has been described with reference to several exemplary embodiments, it is understood that the words that have been used are words of description and illustration, rather than words of limitation. Changes may be made within the purview of the appended claims, as presently stated and as amended, without departing from the scope and spirit of the present disclosure in its aspects. Although the invention has been described with reference to particular means, materials and embodiments, the invention is not intended to be limited to the particulars disclosed; rather the invention extends to all functionally equivalent structures, methods, and uses such as are within the scope of the appended claims.

For example, while the computer-readable medium may be described as a single medium, the term "computer-readable medium" includes a single medium or multiple media, such as a centralized or distributed database, and/or associated caches and servers that store one or more sets of instructions. The term "computer-readable medium" shall also include any medium that is capable of storing, encoding or carrying a set of instructions for execution by a processor or that cause a computer system to perform any one or more of the embodiments disclosed herein.

The computer-readable medium may comprise a non-transitory computer-readable medium or media and/or comprise a transitory computer-readable medium or media. In a particular non-limiting, exemplary embodiment, the computer-readable medium can include a solid-state memory such as a memory card or other package that houses one or more non-volatile read-only memories. Further, the computer-readable medium can be a random access memory or other volatile re-writable memory. Additionally, the computer-readable medium can include a magneto-optical or optical medium, such as a disk or tapes or other storage device to capture carrier wave signals such as a signal communicated over a transmission medium. Accordingly, the disclosure is considered to include any computer-readable medium or other equivalents and successor media, in which data or instructions may be stored.

Although the present application describes specific embodiments which may be implemented as computer programs or code segments in computer-readable media, it is to be understood that dedicated hardware implementations, such as application specific integrated circuits, programmable logic arrays and other hardware devices, can be constructed to implement one or more of the embodiments described herein. Applications that may include the various embodiments set forth herein may broadly include a variety of electronic and computer systems. Accordingly, the present application may encompass software, firmware, and hardware implementations, or combinations thereof. Nothing in the present application should be interpreted as being implemented or implementable solely with software and not hardware.

Although the present specification describes components and functions that may be implemented in particular embodiments with reference to particular standards and protocols, the disclosure is not limited to such standards and protocols. Such standards are periodically superseded by faster or more efficient equivalents having essentially the same functions. Accordingly, replacement standards and protocols having the same or similar functions are considered equivalents thereof.

The illustrations of the embodiments described herein are intended to provide a general understanding of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

One or more embodiments of the disclosure may be referred to herein, individually and/or collectively, by the term "invention" merely for convenience and without intending to voluntarily limit the scope of this application to any particular invention or inventive concept. Moreover, although specific embodiments have been illustrated and described herein, it should be appreciated that any subsequent arrangement designed to achieve the same or similar purpose may be substituted for the specific embodiments shown. This disclosure is intended to cover any and all subsequent adaptations or variations of various embodiments. Combinations of the above embodiments, and other embodiments not specifically described herein, may be apparent to those of skill in the art upon reviewing the description.

The Abstract of the Disclosure is submitted with the understanding that it will not be used to interpret or limit the scope or meaning of the claims. In addition, in the foregoing Detailed Description, various features may be grouped together or described in a single embodiment for the purpose of streamlining the disclosure. This disclosure is not to be interpreted as reflecting an intention that the claimed embodiments require more features than are expressly recited in each claim. Rather, as the following claims reflect, inventive subject matter may be directed to less than all of the features of any of the disclosed embodiments. Thus, the following claims are incorporated into the Detailed Description, with each claim standing on its own as defining separately claimed subject matter.

The above disclosed subject matter is to be considered illustrative, and not restrictive, and the appended claims are intended to cover all such modifications, enhancements, and other embodiments which fall within the true spirit and scope of the present disclosure. Thus, to the maximum extent allowed by law, the scope of the present disclosure is to be determined by the broadest permissible interpretation of the following claims and their equivalents, and shall not be restricted or limited by the foregoing detailed description.

## Claims

1. A method for data processing by utilizing one or more processors along with allocated memory, the method comprising:
i) implementing an artificial intelligence (AI) powered bot system, wherein the bot system includes a user interface;
ii) establishing a communication link among the bot system, an AI and Machine Learning Natural Language Processing (AIML NLP) service, a parsing module including a post processing component and a response generation component, an automated pricing module, and an order management system;
iii) receiving, by the parsing module, via the user interface, user input from a user as text data wherein the text data indicates a Request for Quote (RFQ) for a derivative instrument;
iv) transmitting the text data to the AIML NLP service from the parsing module;
v) extracting, by the parsing module, parameters associated with the RFQ by utilizing an entity extraction model provided by the AIML NLP service;
vi) normalizing the extracted parameters and transmitting the normalized parameters to the automated pricing module;
vii) receiving pricing details data by the response generation component from the automated pricing module; and
viii) transmitting the pricing details data to the bot for receiving user input via the user interface to conduct a transaction with respect to the derivative instrument.

2. The method according to claim 1, further comprising:
recording the transaction and transmitting the recorded transaction to the order management system for execution; and
executing the transaction with respect to the derivative instrument.

3. The method according to claim 1, wherein the post processing component implements Natural Language Understanding (NLU) processes for colloquial terminology expressed within derivatives RFQ structures.

4. The method according to claim 1, further comprising:
generating a human readable response by the response generation module from the pricing details data returned by automated pricing module by implementing a Natural Language Generation (NLG) algorithm; and
transmitting the human readable response to the user interface.

5. The method according to claim 1, wherein the entity extraction model is a machine learning model that is trained to extract entities that represent bits of information about nature of the RFQ from the user.

6. The method according to claim 1, further comprising:
storing the pricing details data associated with the RFQ onto a database;
receiving user input to reprice the RFQ; and
repeating the steps iv) through viii) to generate a repricing of the RFQ.

7. The method according to claim 1, further comprising:
implementing a feedback loop service that, for each request, receives all information pertaining to the RFQ including one or more of the following: original text, entities predicted by Named Entity Recognition (NER) model, normalized tradeable format, generated response, and user's feedback on correctness of information presented to the user.

8. A system for data processing, the system comprising:
a processor; and
a memory operatively connected to the processor via a communication interface, the memory storing computer readable instructions, when executed, causes the processor to:
i) implement an artificial intelligence (AI) powered bot system, wherein the bot system includes a user interface;
ii) establish a communication link among the bot system, an AI and Machine Learning Natural Language Processing (AIML NLP) service, a parsing module including a post processing component and a response generation component, an automated pricing module, and an order management system;
iii) receive, by the parsing module, via the user interface, user input from a user as text data wherein the text data indicates a Request for Quote (RFQ) for a derivative instrument;
iv) transmit the text data to the AIML NLP service from the parsing module;
v) extract, by the parsing module, parameters associated with the RFQ by utilizing an entity extraction model provided by the AIML NLP service;
vi) normalize the extracted parameters and transmit the normalized parameters to the automated pricing module;
vii) receive pricing details data by the response generation component from the automated pricing module; and
viii) transmit the pricing details data to the bot for receiving user input via the user interface to conduct a transaction with respect to the derivative instrument.

9. The system according to claim 8, wherein the processor is further configured to:
record the transaction and transmit the recorded transaction to the order management system for execution; and
execute the transaction with respect to the derivative instrument.

10. The system according to claim 8, wherein the post processing component implements Natural Language Understanding (NLU) processes for colloquial terminology expressed within derivatives RFQ structures.

11. The system according to claim 8, wherein the processor is further configured to:
generate a human readable response by the response generation module from the pricing details data returned by automated pricing module by implementing a Natural Language Generation (NLG) algorithm; and
transmit the human readable response to the user interface.

12. The system according to claim 8, wherein the entity extraction model is a machine learning model that is trained to extract entities that represent bits of information about nature of the RFQ from the user.

13. The system according to claim 8, wherein the processor is further configured to:
store the pricing details data associated with the RFQ onto a database;
receive user input to reprice the RFQ; and
repeat the steps iv) through viii) to generate a repricing of the RFQ.

14. The system according to claim 8, wherein the processor is further configured to:
implement a feedback loop service that, for each request, receives all information pertaining to the RFQ including one or more of the following: original text, entities predicted by a Named Entity Recognition (NER) model, normalized tradeable format, generated response, and user's feedback on correctness of information presented to the user.

15. A non-transitory computer readable medium configured to store instructions for data processing, the instructions, when executed, cause a processor to perform the following:
i) implementing an artificial intelligence (AI) powered bot system, wherein the bot system includes a user interface;
ii) establishing a communication link among the bot system, an AI and Machine Learning Natural Language Processing (AIML NLP) service, a parsing module including a post processing component and a response generation component, an automated pricing module, and an order management system;
iii) receiving, by the parsing module, via the user interface, user input from a user as text data wherein the text data indicates a Request for Quote (RFQ) for a derivative instrument;
iv) transmitting the text data to the AIML NLP service from the parsing module;
v) extracting, by the parsing module, parameters associated with the RFQ by utilizing an entity extraction model provided by the AIML NLP service;
vi) normalizing the extracted parameters and transmitting the normalized parameters to the automated pricing module;
vii) receiving pricing details data by the response generation component from the automated pricing module; and
viii) transmitting the pricing details data to the bot for receiving user input via the user interface to conduct a transaction with respect to the derivative instrument.

16. The non-transitory computer readable medium according to claim 15, wherein the instructions, when executed, cause the processor to further perform the following:
recording the transaction and transmitting the recorded transaction to the order management system for execution; and
executing the transaction with respect to the derivative instrument.

17. The non-transitory computer readable medium according to claim 15, wherein the post processing component implements Natural Language Understanding (NLU) processes for colloquial terminology expressed within derivatives RFQ structures.

18. The non-transitory computer readable medium according to claim 15, wherein the instructions, when executed, cause the processor to further perform the following:
generating a human readable response by the response generation module from the pricing details data returned by automated pricing module by implementing a Natural Language Generation (NLG) algorithm; and
transmitting the human readable response to the user interface.

19. The non-transitory computer readable medium according to claim 15, wherein the entity extraction model is a machine learning model that is trained to extract entities that represent bits of information about nature of the RFQ from the user.

20. The non-transitory computer readable medium according to claim 15, wherein the instructions, when executed, cause the processor to further perform the following:
storing the pricing details data associated with the RFQ onto a database;
receiving user input to reprice the RFQ; and
repeating the steps iv) through viii) to generate a repricing of the RFQ.
